# EUROPEAN PATENT APPLICATION

(11) **EP 1 553 010 A1**
(43) Date of publication of application: **13.07.2005**
(21) Application number: 04030235.8
(22) Date of filing: 21.12.2004
(51) Int. Cl.: B62H 1/12, B62K 11/00

(54) **Stabilizing device for motorcycles and the like**

(30) Priority: 09.01.2004 IT MO20040002
(71) Applicant: Meta System S.p.A., 42100 Reggio Emilia (IT)
(72) Inventor: Simonazzi, Giuseppe, 42100 Reggio Emilia (IT)
(74) Representative: Modiano, Guido, Dr.-Ing.

(57) **Abstract**

A stabilizing device for motorcycles and the like, comprising a first linear actuator (1) and a second linear actuator (2), which are suitable to be connected to the frame of a motorcycle or the like and support, at their respective ends, a first wheel (3) and a second wheel (4), and a control unit (10), which is suitable to actuate the first and second linear actuators (1, 2) so that they move down or up in order to make the first and second wheels (3, 4) touch the ground or not in accordance with signals in input to the control unit (10), which define trim conditions of the motorcycle.

## Description

The present invention relates to a stabilizing device for motorcycles and the like.

More particularly, the invention relates to a stabilizing device that is suitable to be used in motorcycles and the like in order to increase their lateral stability and limit as much as possible the use of legs and feet during maneuvers and braking.

As it is known, in recent years, due to the ever-increasing traffic, motorcycles are becoming increasingly widespread in built-up areas and outside cities and are used not only in the spring and summer period but also in winter and autumn months, which are characterized by frequent bad weather (rain, wind and cold).

Among the various types of motorcycle, models are known which comprise a safety cabin that is open laterally and is provided with a roof for protection against impacts and bad weather.

The cabin necessarily must be open laterally in order to allow the user to place his feet on the ground during the various steps of maneuvering and braking, during which the lateral stability of the vehicle is reduced.

In this manner, the cabin, in addition to not allowing full protection of the user during actual travel of the motorcycle, does not reduce the risk of possible impacts or accidents affecting the legs during maneuvers between queued vehicles and obstacles in general.

Moreover, it is noted that the increased popularity of motorcycles has inevitably entailed the involvement of users who are normally not accustomed to the use of two-wheeled vehicles and accordingly find themselves dealing with vehicles that do not provide the stability to which they are accustomed when they drive cars.

In particular, the instability of the motorcycle becomes more apparent when the driver makes a turn by tilting the motorcycle about its axis.

In these circumstances, an inexperienced driver may have a feeling of imbalance and therefore become afraid, and this often limits the use of motorcycles by a large number of people who are afraid of their unstable behavior.

Moreover, for example when braking, the motorcycle may tend to lose its trim and therefore in this case also tend to generate instability and a feeling of precariousness on the part of the driver.

The aim of the present invention is to provide a stabilizing device for motorcycles and the like that is capable of acting if the motorcycle tilts to one side, or during slowing, when the natural traveling stability of the motorcycle tends to decrease.

Within this aim, an object of the present invention is to provide a stabilizing device for motorcycles and the like that acts exclusively when required by the driving conditions.

Another object of the present invention is to provide a stabilizing device for motorcycles and the like that allows the user to avoid ever placing his feet on the ground during all the steps of maneuvering, braking, acceleration and travel.

Another object of the present invention is to provide a stabilizing device for motorcycles and the like that allows to design and manufacture motorcycles that have enclosed cabins, constituted by a roof and side doors, which are suitable to always keep the user inside the cabin in maximum safety and protection conditions.

Another object of the present invention is to provide a stabilizing device for motorcycles and the like that allows the driver to concentrate specifically on driving without having to pay attention to balance.

Another object of the present invention is to provide a stabilizing device for motorcycles and the like that is highly reliable, relatively simple to manufacture, and at competitive costs.

This aim and these and other objects that will become better apparent hereinafter are achieved by the present stabilizing device for motorcycles and the like, characterized in that it comprises a first linear actuator and a second linear actuator, which are suitable to be connected to the frame of a motorcycle or the like and support, at their respective ends, a first wheel and a second wheel, and a control unit, which is suitable to actuate said first and second linear actuators so that they move down or up in order to make said first and second wheels touch the ground or not in accordance with signals in input to said control unit, which define trim conditions of the motorcycle.

Further characteristics and advantages of the present invention will become better apparent from the following detailed description of a preferred but not exclusive embodiment of the device according to the present invention, illustrated by way of non-limiting example in the accompanying drawings, wherein:

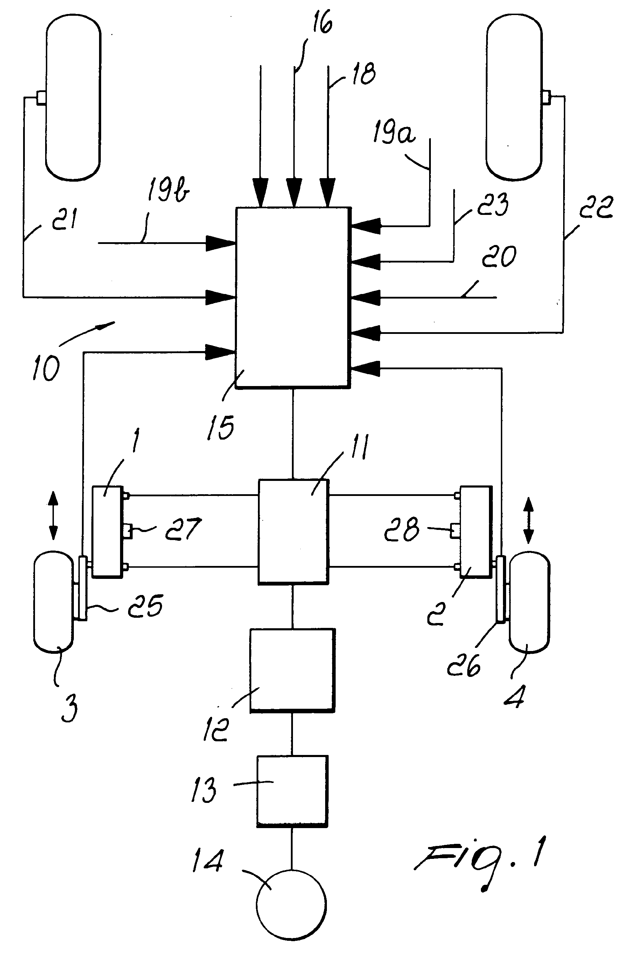

Figure 1 is a block diagram of the stabilizing device according to the present invention;

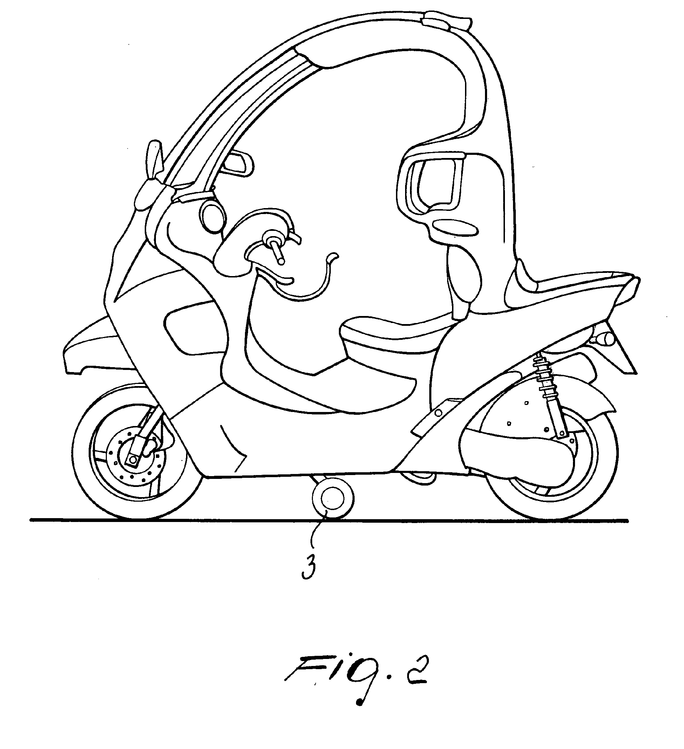

Figure 2 is a side elevation view of the stabilizing device according to the invention applied to a motorcycle;

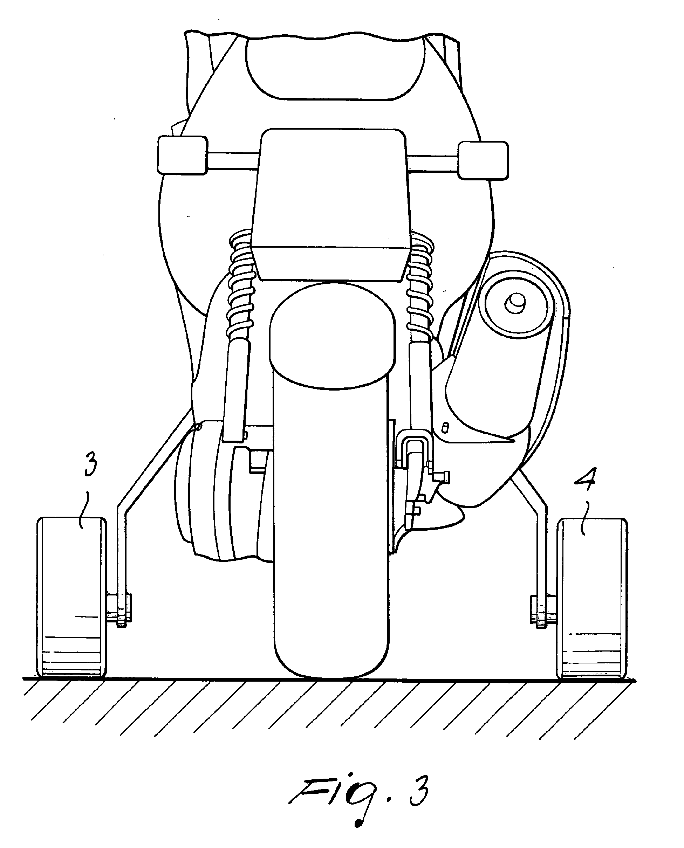

Figure 3 is a rear side elevation view of the stabilizing device according to the invention applied to a motorcycle.

With reference to the figures, a device according to the present invention comprises a first linear actuator and a second linear actuator, which are constituted for example by two hydraulic pistons 1 and 2, which are suitable to be connected to the bodywork or frame of a motorcycle and to which a first wheel and a second wheel are respectively connected, said wheels being constituted for example by a left wheel 3 and by a right wheel 4; said wheels, as a consequence of the extension of the hydraulic pistons 1 and 2, make contact with the ground when required or retract as a consequence of the return stroke of the hydraulic pistons 1 and 2.

An electronic control unit, generally designated by the reference numeral 10, controls the actuation of the hydraulic pistons 1 and 2, and accordingly controls a hydraulic circuit that comprises a fluid distribution unit 11, which is supplied by a fluid tank 12, which in turn dispenses fluid (oil or the like) by operating a pump 13 driven by an electric motor 14.

The electronic control unit comprises at least one microprocessor 15, which is suitable to process a plurality of signals, according to which it determines the actuation or not of the hydraulic pistons 1 and 2.

Conveniently, such signals comprise a motorcycle speed signal 16, a motorcycle left tilt signal 17 and a corresponding motorcycle right tilt signal 18, a right steering angle signal 19a and a left steering angle signal 19b, an ABS-controlled motorcycle stop signal 20, a motorcycle front wheel rotation rate signal 21, a motorcycle rear wheel rotation rate signal 22, and a motorcycle acceleration/deceleration signal 23.

On the basis of the signals cited above, which are given merely by way of example, since other signals may be provided as inputs to the microprocessor 15 in order to drive the fluid distribution unit 11, the microprocessor 15 determines whether to extend or not the hydraulic pistons 1 and 2, in order to lower the wheels 3 and 4 of the stabilizing device and make them touch the ground so as to stabilize the motorcycle.

Conveniently, the hydraulic pistons 1 and 2 are provided with linear potentiometers/limit switches 25 and 26 respectively, in order to determine the instantaneous position of the hydraulic pistons 1 and 2 with respect to their maximum extension stroke or with respect to their inactive position.

Finally, load cells 27 and 28 may be provided in order to detect continuously the load applied to the hydraulic pistons 1 and 2.

However, alternative embodiments are also possible in which the first and second linear actuators are of the pneumatic, electrical, mechanical or electromechanical type.

With reference to the figures, the operation of the stabilizing device according to the present invention is as follows.

One should bear in mind that the operation described here exemplifies one of the many possibilities of operation that can be provided, depending on the requirements and on the type of motorcycle.

Substantially, when the motorcycle is stationary, the control unit 10 lowers the wheels 3 each 4, which accordingly make contact with the ground and act as a stand for the motorcycle.

When starting off, the wheels 3 and 4 begin to lift proportionally to the speed of the vehicle.

This lifting can of course be provided according to requirements, and therefore the speed at which the wheels 3 and 4 lift depending on the travel speed of the motorcycle can be set at will.

During maneuvering at low speed, the wheels 3 and 4 can, for example, be lifted by 2/3 of their maximum stroke and the wheel at which the unit 15 detects a tilt is lowered so as to always keep the motorcycle balanced with at least three wheels in touch with the ground.

If instead there is a difference in speed between the front wheel and the rear wheel, i.e., if the front wheel is rotating at a higher or lower rate than the rear wheel, the unit 15 lifts the wheels 3 and 4 in order to avoid motorcycle sticking problems caused by resting on only one of the driving wheels and one of the auxiliary wheels 3 and 4.

Above a certain travel speed, the wheels 3 and 4 are locked in the raised position by means of a safety device.

During deceleration, the control unit 15 acts on the safety device in order to release the wheels and allow them to descend gradually until they make contact with the ground when the motorcycle is substantially stationary.

If the unit 15 detects a strong deceleration, the hydraulic pistons 1 and 2 can be made to descend faster in order to move the wheels 3 and 4 rapidly into contact with the ground.

In practice it has been found that the device according to the present invention fully achieves the intended aim and objects, since it allows to stabilize a motorcycle by having at least three wheels on the ground at all times when the motorcycle is in unstable conditions, for example when it is tilted to the left or to the right, or when the motorcycle stops.

Further, such a device allows to design and manufacture motorcycles that are extremely versatile and may optionally be provided with true enclosed cabins that are suitable to ensure to the user a high degree of safety that is very similar to the safety provided by a car.

By means of this device, the user in fact is no longer forced to rest his feet on the ground during maneuvering, braking and acceleration, and can keep his legs inside said cabin, thus preventing any risk of accidental impacts against other vehicles or obstacles in general.

The device automatically performs all the operations required to maintain the lateral stability of the motorcycle that up to now have been performed by the user's legs and feet.

The device thus conceived is susceptible of numerous modifications and variations, all of which are within the scope of the appended claims; all the details may further be replaced with other technically equivalent elements.

In practice, the materials used, as well as the contingent shapes and dimensions, may be any according to requirements and to the state of the art.

The disclosures in Italian Patent Application No. MO2004A000002 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A stabilizing device for motorcycles and the like, **characterized in that** it comprises a first linear actuator and a second linear actuator, which are suitable to be connected to the frame of a motorcycle or the like and support, at their respective ends, a first wheel and a second wheel, and a control unit, which is suitable to actuate said first and second linear actuators so that they move down or up in order to make said first and second wheels touch the ground or not in accordance with signals in input to said control unit, which define trim conditions of the motorcycle.

2. The device according to claim 1, **characterized in that** said first and second linear actuators are of the type operated by way of a fluid medium.

3. The device according to claim 2, **characterized in that** said first and second linear actuators are of the hydraulic type.

4. The device according to claim 2, **characterized in that** said first and second linear actuators are of the pneumatic type.

5. The device according to one or more of the preceding claims, **characterized in that** said control unit drives a fluid distribution unit that is suitable to send a pressurized fluid to said first and second linear actuators.

6. The device according to claim 5, **characterized in that** it comprises a tank of said fluid, at least one pump and an electric motor for dispensing the fluid from said tank to said fluid distribution unit.

7. The device according to claim 1, **characterized in that** said first and second linear actuators are of the electrical, mechanical or electromechanical type.

8. The device according to one or more of the preceding claims, **characterized in that** said control unit comprises a microprocessor that is suitable to process said signals that define the trim of said motorcycle.

9. The device according to one or more of the preceding claims, **characterized in that** said signals that define the trim of said motorcycle comprise at least one signal that belongs to the following group:
motorcycle left tilt signal;
motorcycle right tilt signal;
left steering angle signal;
right steering angle signal;
motorcycle front wheel rotation rate signal;
motorcycle rear wheel rotation rate signal;
motorcycle acceleration/deceleration signal;
ABS-controlled motorcycle stop signal.

10. The device according to one or more of the preceding claims, **characterized in that** each one of said first and second linear actuators comprises a corresponding stroke limiting linear potentiometer.

11. The device according to one or more of the preceding claims, **characterized in that** each one of said first and second linear actuators comprises an associated load cell.
